# EUROPEAN PATENT APPLICATION

(11) **EP 3 761 182 A1**
(43) Date of publication of application: **06.01.2021**
(21) Application number: 18907444.6
(22) Date of filing: 26.02.2018
(51) Int. Cl.: G06F 13/00, G06F 17/28

(54) **WEBPAGE TRANSLATION SYSTEM, WEBPAGE TRANSLATION DEVICE, WEBPAGE PROVISION DEVICE, AND WEBPAGE TRANSLATION METHOD**

(71) Applicant: Loveland Co., Ltd., Tokyo 104-0061 (JP)
(72) Inventor: TANAKA, Hatsumi, Tokyo 104-0061 (JP); MIYASAKA, Masumi, Tokyo 104-0061 (JP)
(74) Representative: Plougmann Vingtoft a/s
(86) International application number: PCT/JP2018/006896
(87) International publication number: WO 2019/163117

(57) **Abstract**

To improve user's convenience in a service of translating and providing a webpage. A webpage providing apparatus acquires, upon receiving a request for a webpage from a terminal, information on a use language set to the terminal, and transmits, when the use language of the terminal is different from a use language used in the webpage, information on the use language of the terminal and the use language of the webpage and data of a text of the webpage to a webpage translation apparatus. The webpage translation apparatus defines a first translation box corresponding to the webpage and a second translation box corresponding to the terminal, and sets coupling between the first translation box and the second translation box so that a text included in data in the first translation box is translated and that the data in the first translation box is deployed in the second translation box. The webpage translation apparatus further deploys the data of the webpage in the first translation box and acquires the data of the translated webpage deployed in the second translation box.

## Description

### [Technical Field]

The present invention relates to a technique of translating and providing a webpage.

### [Background Art]

A website translation tool is known as a tool for allowing a webpage to be browsed in a plurality of languages without creating the webpages in languages of respective countries (see NPL 1 and 2). A website provider registers a webpage thereof in a system of a website translation tool and adds a predetermined plug-in to the source of the webpage. In this way, the webpage can be made compatible with a plurality of languages. That is, the webpage can be browsed in a plurality of languages.

Since a language selection menu is displayed in the webpage, when a user selects a desired language from the language selection menu when browsing the webpage, the webpage is translated into the selected language by the system. A translated webpage is displayed on the terminal of the user.

### [Citation List]

### [Non Patent Literature]

[NPL 1]
   "Website translation tool", [online], [retrieved on October 14, 2017], Internet <URL: https://translate.google.com/manager/website/>
[NPL 2]
   "Google Translate Help", [online], [retrieved on October 14, 2017], Internet <URL: https://support.google.com/translate/answer/2534601>

### [Summary of Invention]

### [Technical Problem]

The website translation tool has displaying problems and operational problems related to user's convenience.

Displaying problems will be described.

A webpage may include content (hereinafter referred to as "embedded content") such that a display based on data of a database constructed separately such as a bulletin board, an input form, or a shopping cart is embedded in the webpage. When a webpage is translated into and displayed in a desired language and text is included in the embedded content, it is desirable that the text is translated into and displayed in the same language.

However, a database that stores data to be displayed in the embedded content is sometimes not linked to each webpage that uses the content. Due to this, there is a displaying problem that even when a webpage is registered in a website translation tool and the webpage is translated into a desired language, the portion of the embedded content is not translated and is displayed in an original language. For example, a shopping site targeting a broad range of markets may be provided in multiple languages. However, even when a shopping site is constructed so as to be translated into languages of respective countries using a website translation tool, if the portion of a shopping cart is not translated and is displayed in an original language, it may be not possible to promote purchase sufficiently.

Next, operational problems will be described.

In the website translation tool, a user needs to select a language to translate a webpage into a desired language. There is an operational problem in that a user is urged to select a language. Moreover, the webpage is not translated into a desired language unless the user notices the presence of a language selection menu. Particularly, when a user browses a website using a smartphone or a tablet terminal, an operation of selecting a language may hinder the user's convenience.

One of the objects of the present invention is to provide a technique of improving user's convenience in a service of translating and providing a webpage.

### [Solution to Problem]

A webpage translation system according to an embodiment of the present invention includes a webpage providing apparatus that stores data of a webpage including a text and provides the webpage to a terminal; and a webpage translation apparatus that translates the text of the webpage. The webpage providing apparatus acquires, upon receiving a request for a webpage from the terminal, information on a use language set to the terminal and transmits, when the use language of the terminal is different from a use language used in the webpage, information on the use language of the terminal and the use language of the webpage and data of the webpage to the webpage translation apparatus. The webpage translation apparatus defines a first translation box corresponding to the webpage and correlates the use language of the webpage with the first translation box, defines a second translation box corresponding to the terminal and correlates the use language of the terminal with the second translation box, and sets coupling between the first translation box and the second translation box so that a text included in data in the first translation box is translated using the language correlated with the first translation box as a translation source language and the language correlated with the second translation box as a translation destination language, and that the data in the first translation box is deployed in the second translation box. The webpage translation apparatus deploys the data of the webpage in the first translation box and transmits the data of the translated webpage deployed in the second translation box on the basis of the coupling to the terminal.

### [Advantageous Effects of Invention]

According to one aspect of the present invention, it is possible to improve user's convenience in a service of translating and providing a webpage.

### [Brief Description of Drawings]

[Fig. 1]

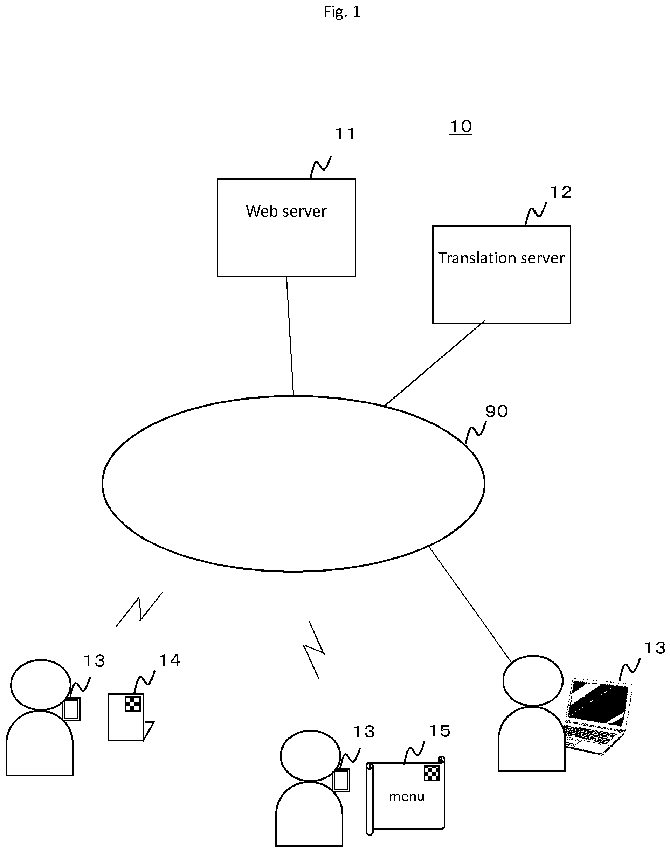

   Fig. 1 is a block diagram of a webpage translation system according to Embodiment 1.
[Fig. 2]

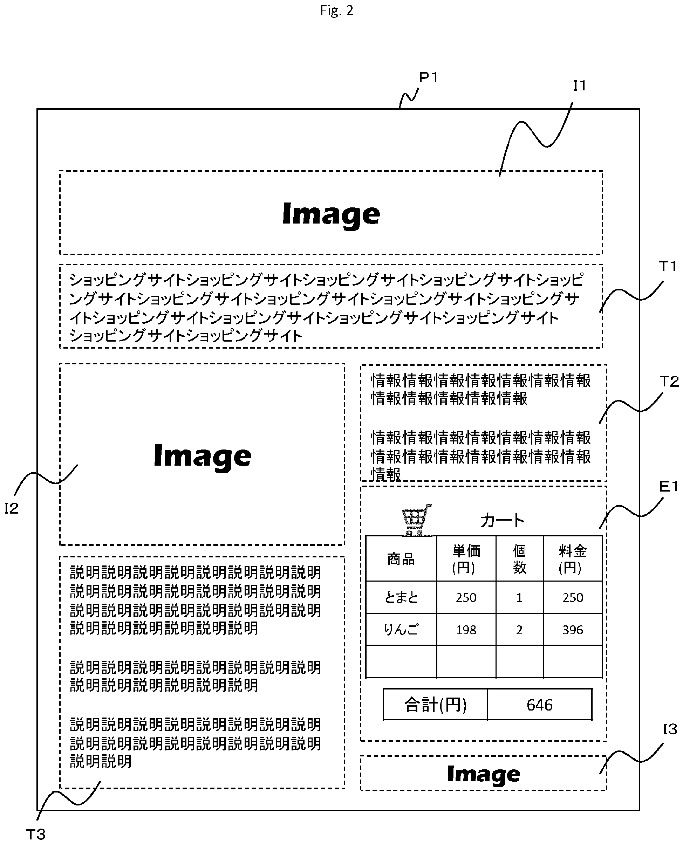

   Fig. 2 is an image diagram illustrating a display example of a webpage provided by a web server 11.
[Fig. 3]

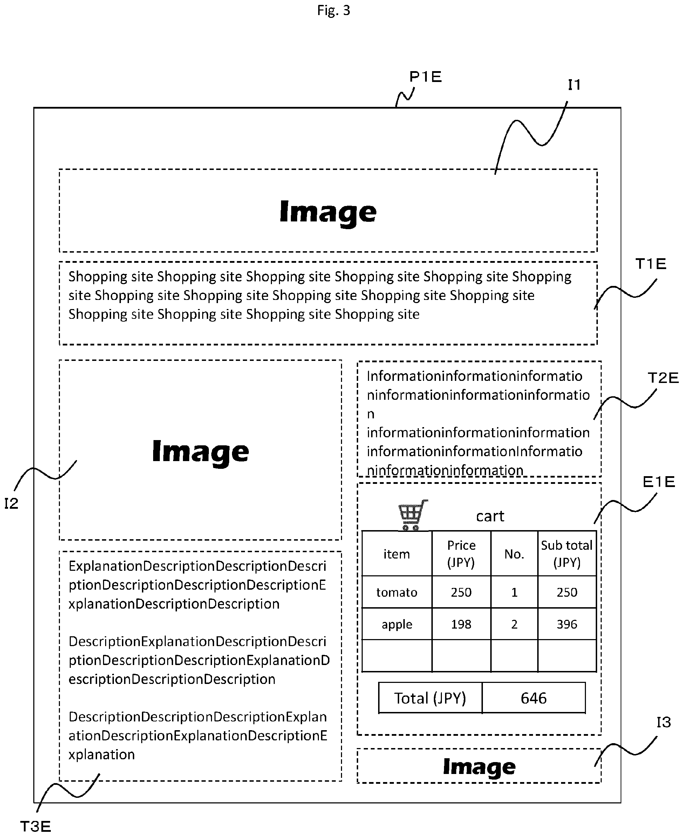

   Fig. 3 is an image diagram illustrating a display example of a webpage obtained by a translation server 12 translating a webpage P1 in Fig. 2 in English.
[Fig. 4]

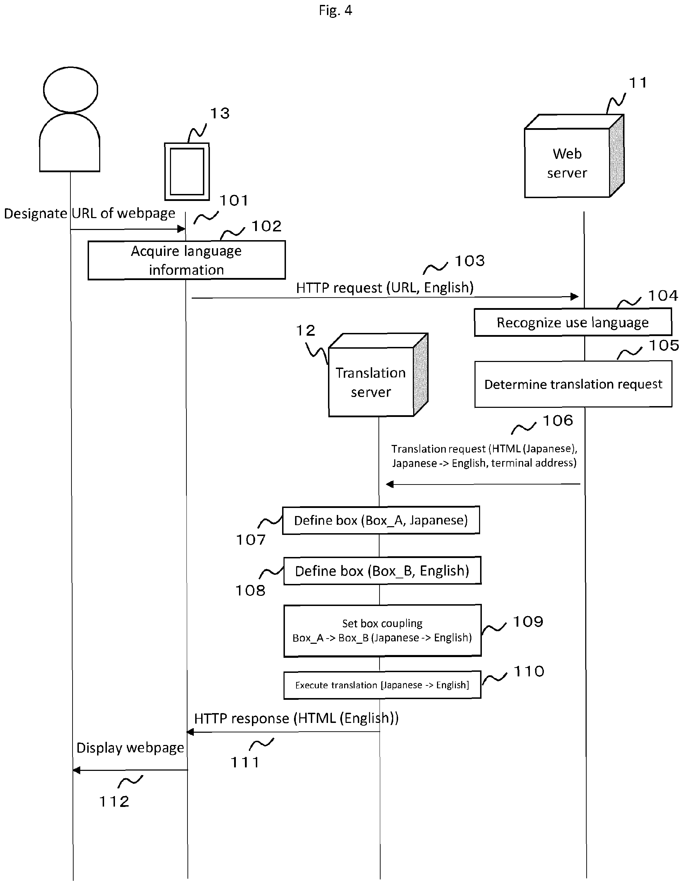

   Fig. 4 is a sequence diagram illustrating an operation of a webpage translation system according to Embodiment 1.
[Fig. 5]

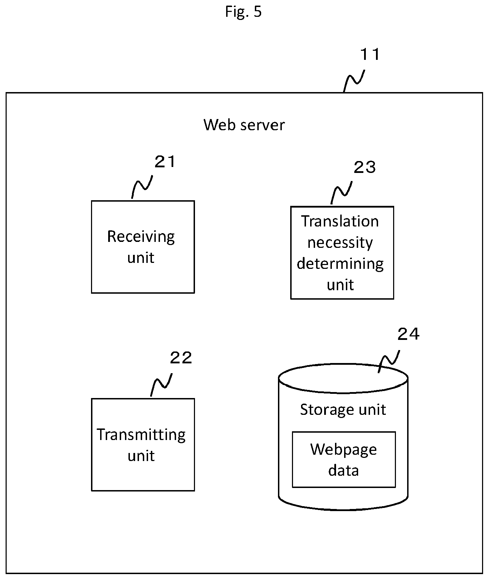

   Fig. 5 is a block diagram of the web server 11.
[Fig. 6]

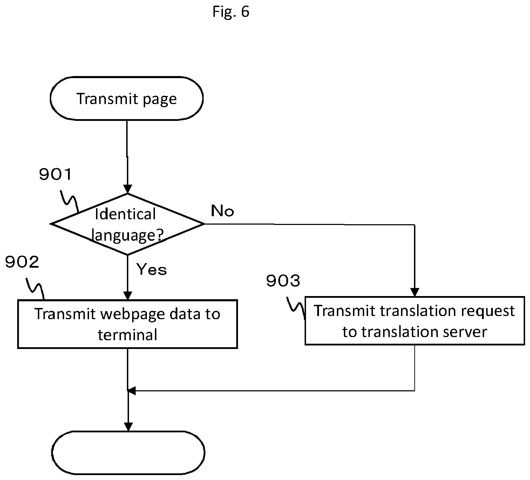

   Fig. 6 is a flowchart illustrating a webpage transmission process performed by the web server 11.
[Fig. 7]

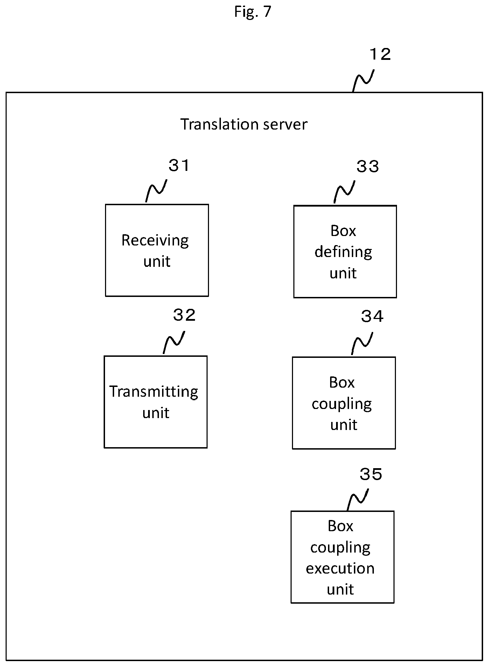

   Fig. 7 is a block diagram of the translation server 12.
[Fig. 8]

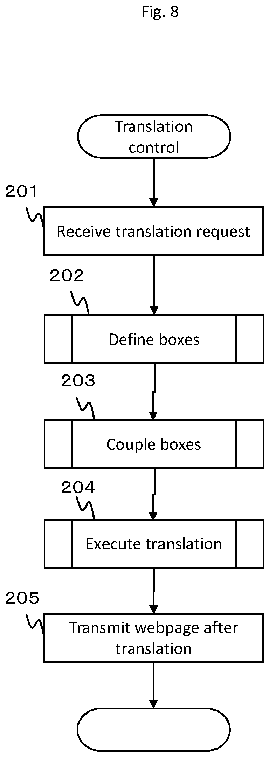

   Fig. 8 is a flowchart illustrating a translation control process performed by the translation server 12.
[Fig. 9]

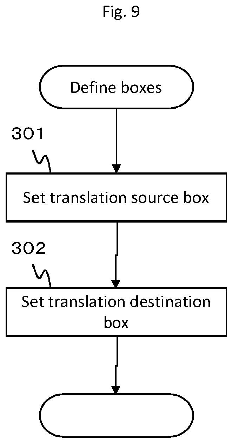

   Fig. 9 is a flowchart illustrating a detailed process of a box defining process.
[Fig. 10]

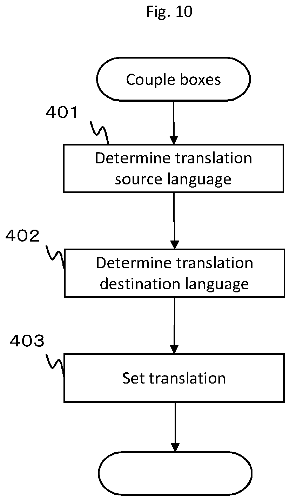

   Fig. 10 is a flowchart illustrating a detailed process of a box coupling process.
[Fig. 11]

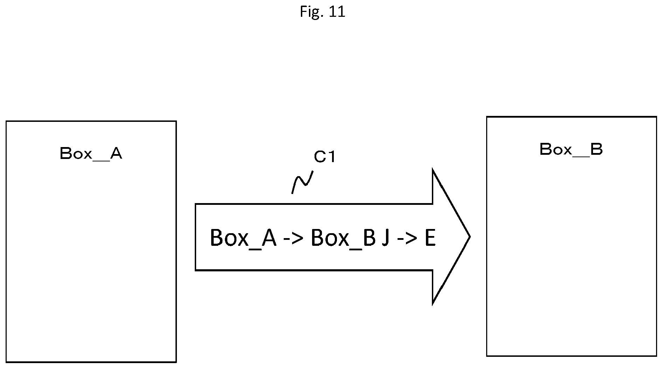

   Fig. 11 is an image diagram illustrating how a translation source box and a translation destination box are coupled.
[Fig. 12]

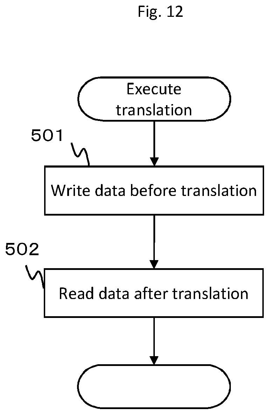

   Fig. 12 is a flowchart illustrating a detailed process of a translation execution process.
[Fig. 13]

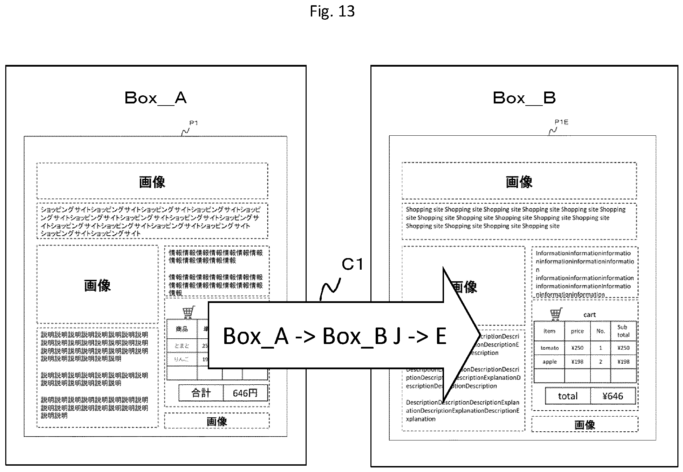

   Fig. 13 is an image diagram illustrating how a webpage is translated by a translation execution process.
[Fig. 14]

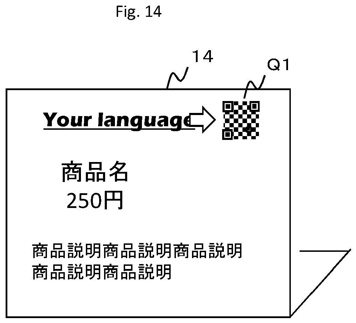

   Fig. 14 is a diagram for describing how a user uses a webpage translation system according to Application Example 1.
[Fig. 15]

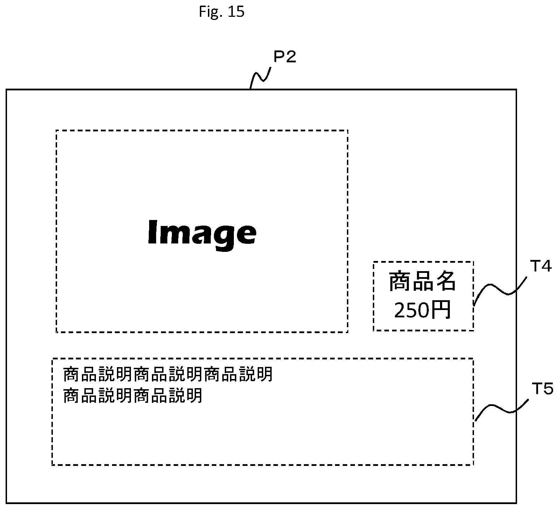

   Fig. 15 is a diagram illustrating a webpage P2 on a URL indicated by a two-dimensional code Q1.
[Fig. 16]

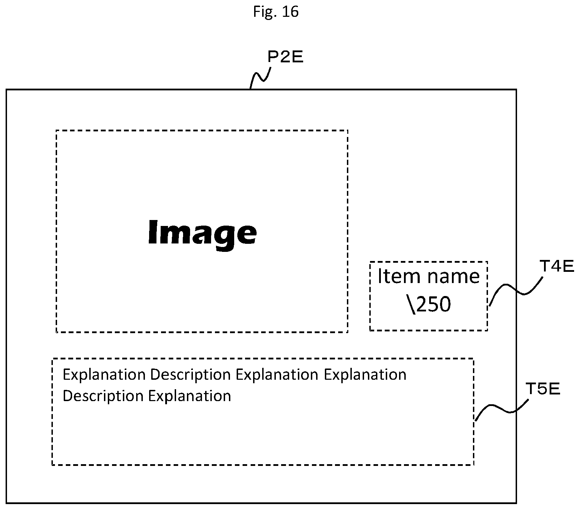

   Fig. 16 is a diagram illustrating a state in which the webpage in Fig. 15 is translated into English.
[Fig. 17]

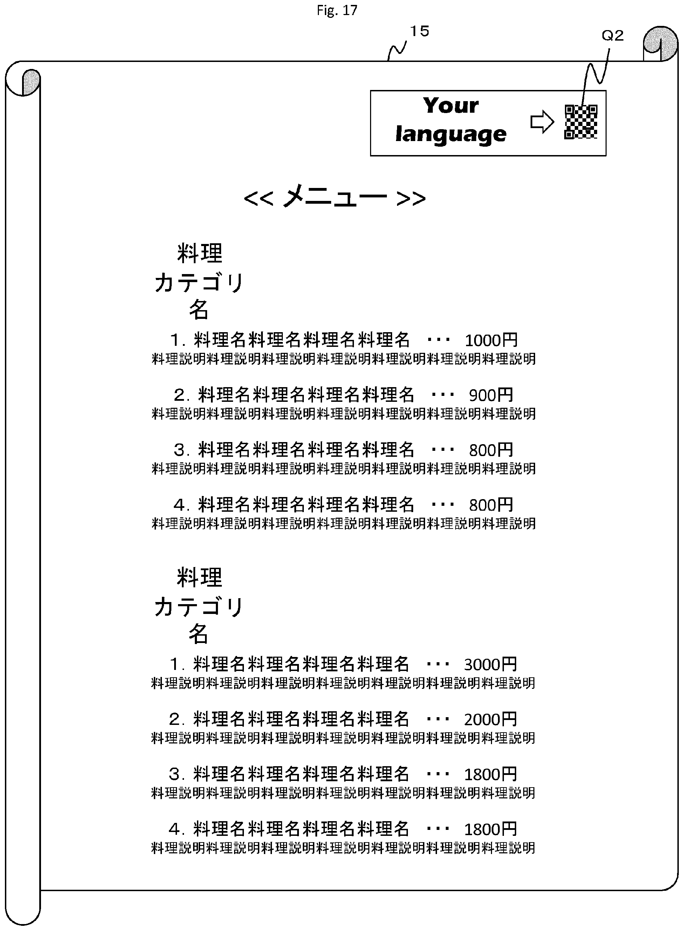

   Fig. 17 is a diagram for describing how a user uses a webpage translation system according to Application Example 2.
[Fig. 18]

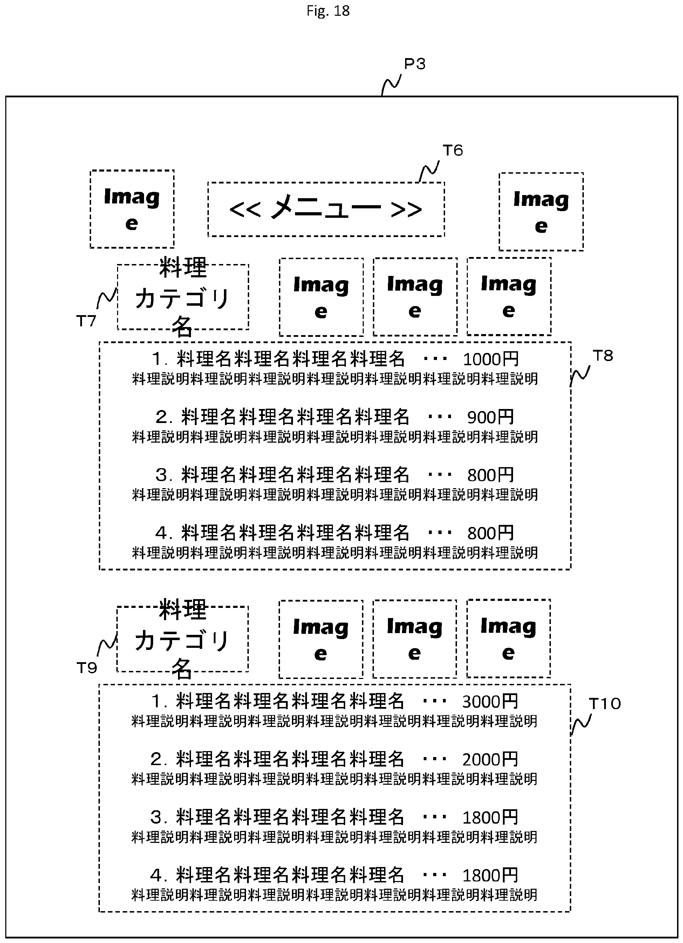

   Fig. 18 is a diagram illustrating a webpage P3 on a URL indicated by a two-dimensional code Q2.
[Fig. 19]

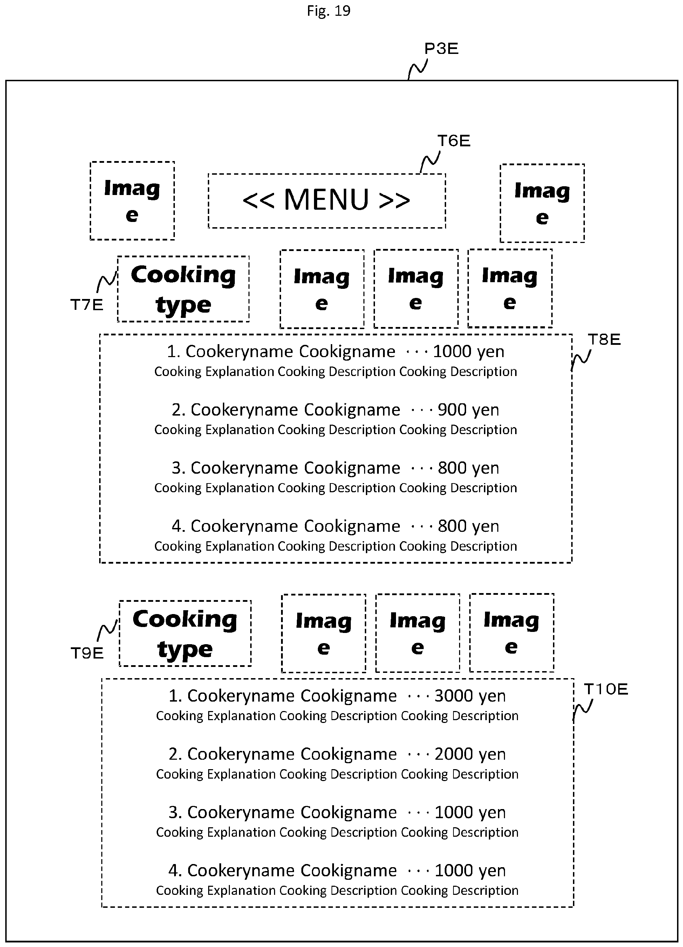

   Fig. 19 is a diagram illustrating a state in which the webpage in Fig. 18 is translated into English.
[Fig. 20]

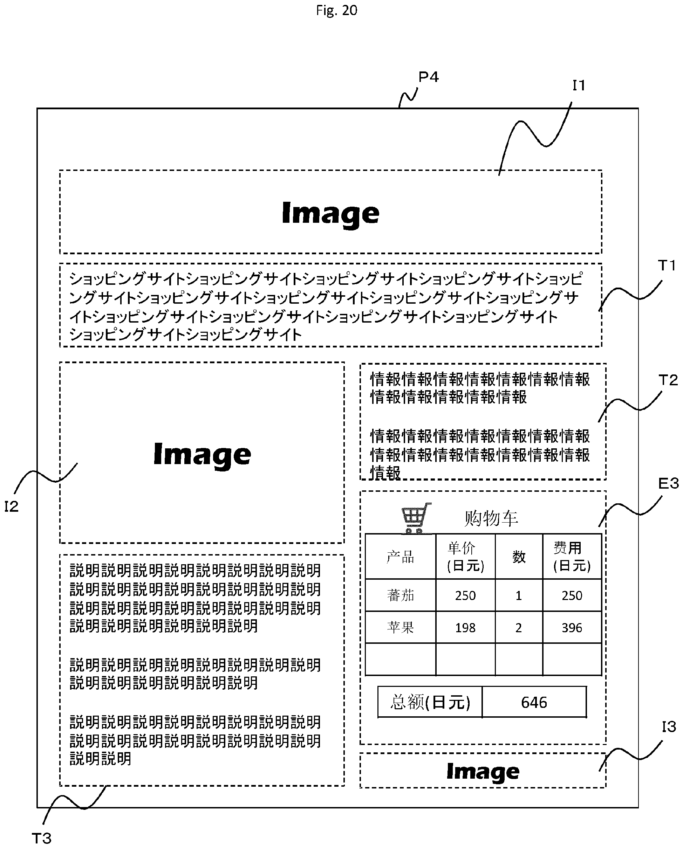

   Fig. 20 is an image diagram illustrating a display example of a webpage including embedded content that displays text in a language different from that of the webpage.
[Fig. 21]

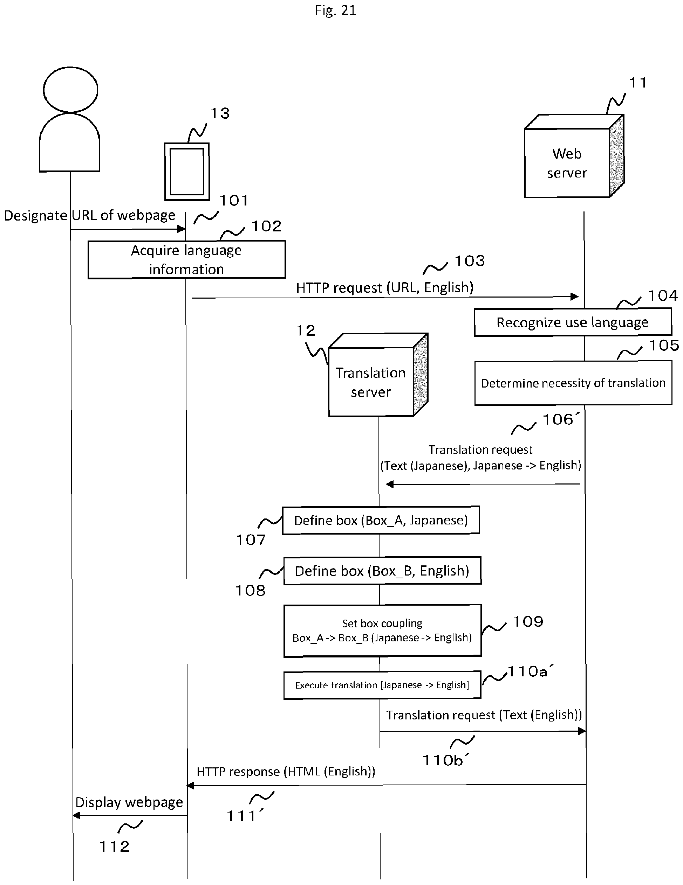

   Fig. 21 is a sequence diagram illustrating an operation of a webpage translation system according to Embodiment 3.
[Fig. 22]

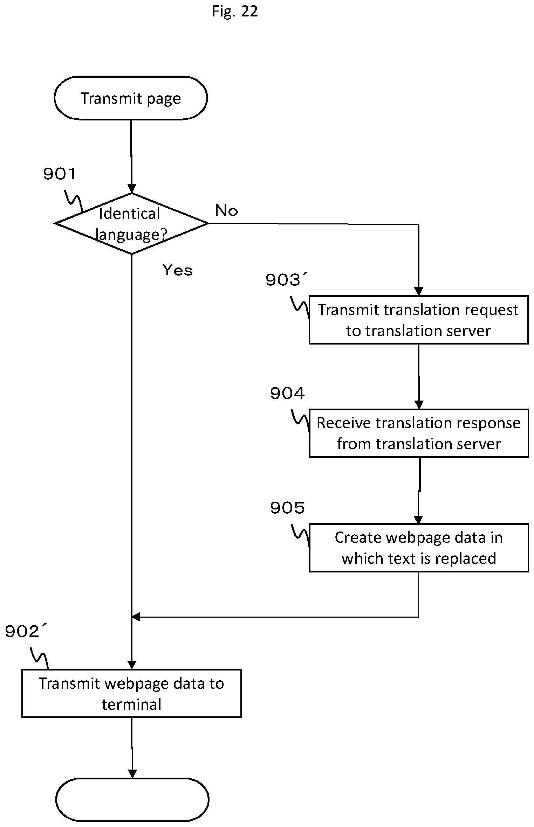

   Fig. 22 is a flowchart illustrating a webpage transmission process performed by the web server 11 according to Embodiment 3.
[Fig. 23]

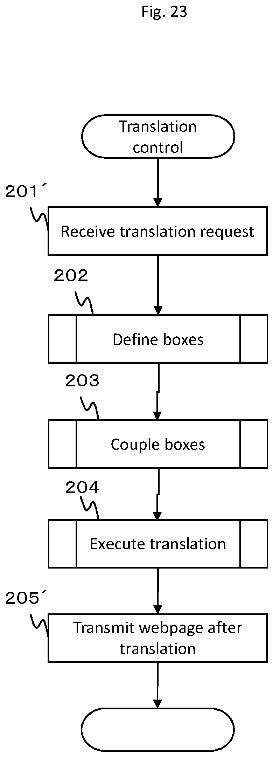

   Fig. 23 is a flowchart illustrating a translation control process performed by the translation server 12 according to Embodiment 3.
[Fig. 24]

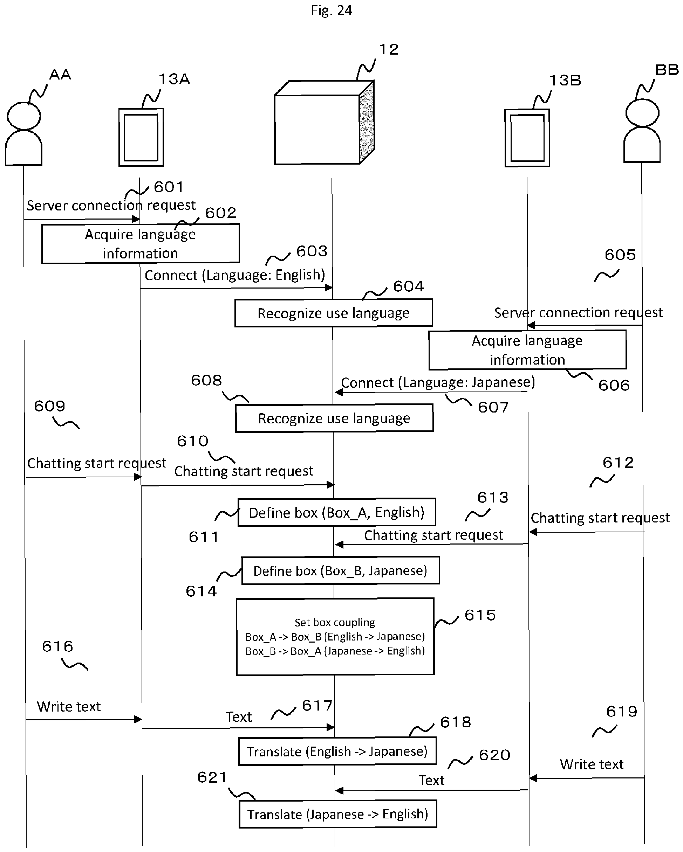

   Fig. 24 is a sequence diagram illustrating exchange of signals with a terminal, of a translation server that operates as a multilingual communication system according to Embodiment 4.
[Fig. 25]

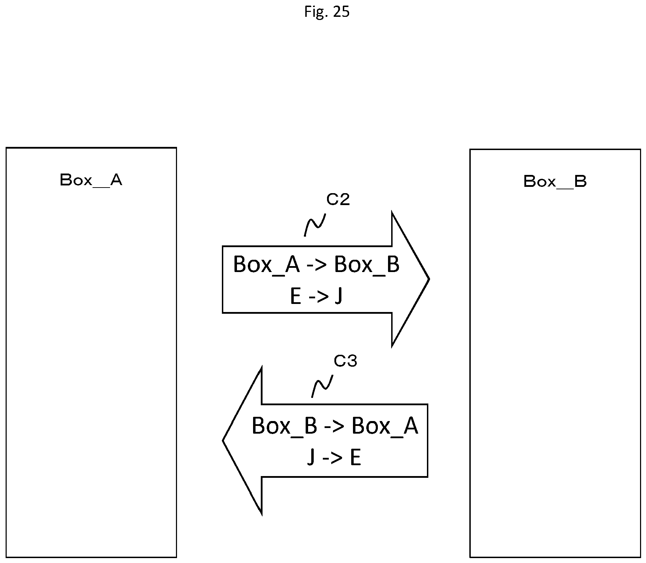

   Fig. 25 is an image diagram illustrating how terminal message boxes are coupled.

### [Description of Embodiments]

An embodiment of the present invention will be described with reference to the drawings.

### [Embodiment 1]

Fig. 1 is a block diagram of a webpage translation system according to Embodiment 1. A webpage translation system 10 of the present embodiment includes a web server 11 and a translation server 12. The web server 11 and the translation server 12 are connected to a communication network 90 such as the Internet.

A terminal 13 can be connected to the communication network 90. The terminal 13 is an information communication device used by a user such as a smartphone, a tablet terminal, or a personal computer.

The web server 11 is a webpage providing apparatus that stores data of webpages including text and provides webpages to terminals 13. The webpage is a hypertext described in an HTML (HyperText Markup Language), for example. The hypertext may include a display of an image or embedded content. The embedded content is content that displays text or the like based on a database such as a bulletin board, an input form, or a shopping cart in a webpage. The language of the embedded content may be different from the language of the entire webpage.

Fig. 2 is an image diagram illustrating a display example of a webpage provided by the web server 11. A webpage P1 includes Japanese texts T1 to T3, images I1 to 13, and an embedded display E1. The embedded display E1 is a display of a shopping cart which is embedded content and includes a Japanese text.

The translation server 12 is a webpage translation apparatus that translates the text of a webpage provided by the web server 11. The translation server 12 translates a webpage and provides the webpage to a user terminal 13 in response to a request from the web server 11.

Fig. 3 is an image diagram illustrating a display example of a webpage obtained by the translation server 12 translating the webpage P1 in Fig. 2 in English. Referring to Fig. 3, the translated webpage P1E includes texts T1E to T3E obtained by translating the Japanese texts T1 to T3 in the pre-translated webpage P1 illustrated in Fig. 2 into English.

An outline of a cooperation operation of the web server 11 and the translation server 12 will be described. In this example, it is assumed that the use language of the webpage P1 is Japanese and the webpage P1 includes a Japanese text. Moreover, it is also assumed that the use language set to the terminal 13 is English. Due to this, in this example, the Japanese text in the webpage P1 illustrated in Fig. 2 is translated into English.

Upon receiving a request for the webpage P1 from the terminal 13, the web server 11 acquires information on the use language (English) set to the terminal 13.

In this case, when the terminal 13 is a personal computer that accesses the web server 11 via a browser, the web server 11 acquires language information registered in the browser of the terminal 13. Since the language information is acquired from the browser of the terminal 13, the user can recognize the use language automatically even if the user does not perform an operation of designating a language.

When the terminal 13 is a smartphone or a tablet terminal that accesses the web server 11 via an application operating on an operating system (OS), the web server 11 acquires language information set to the OS operating on the terminal 13. Since the language information is acquired from the OS of the terminal 13, the user can recognize the use language automatically even if the user does not perform an operation of designating a language.

When the use language of the webpage P1 provided by the web server 11 can be recognized in advance, and the use language of the terminal 13 is different from the use language used by the webpage P1, the web server 11 transmits information on the use language of the terminal 13 and the use language of the webpage P1 and the data of the webpage P1 to the translation server 12. When the use language of the terminal 13 is the same as the use language used in the webpage P1, the web server 11 transmits the data of the webpage P1 to the terminal 13 as it is.

Upon receiving the information on the use language of the terminal 13 and the use language of the webpage P1 and the data of the webpage P1 from the web server 11, the translation server 12 defines a translation source box (a first translation box) corresponding to the webpage P1 and correlates the use language of the webpage P1 with the translation source box. Moreover, the translation server 12 defines a translation destination box (a second translation box) corresponding to the terminal 13 and correlates the use language of the terminal 13 with the translation destination box (the second translation box).

A translation box is an area which is virtually set in a memory or a storage apparatus to execute translation of the text of a webpage. The translation box includes a translation source box in which data of a webpage to be translated is stored and a translation destination box in which data of a translated webpage is stored. A physical position at which the translation box is set is not particularly limited and the translation box may be present at any position. For example, the translation box may be set in a storage area of the web server 11 or may be set in a storage area of the translation server 12. Alternatively, a translation box may be set on a cloud that the translation server 12 can access via the communication network 90.

Furthermore, the translation server 12 sets coupling between the translation source box and the translation destination box so that the text included in the data in the translation source box is translated using the language correlated with the translation source box as a translation source language and the language correlated with the translation destination box as a translation destination language, and that the data in the translation source box is deployed in the translation destination box. This deployment indicates writing data in the translation box.

Subsequently, the translation server 12 deploys data of the webpage P1 in the translation source box. As a result, on the basis of the coupling of translation boxes, the Japanese text of the webpage P1 deployed in the translation source box is translated into English, and the data of the translated webpage P1E is deployed in the translation box after translation. The translation server 12 transmits the data of the translated webpage P1E deployed in the translation box after translation on the basis of the coupling to the terminal 13.

In this manner, since the webpage P1 is translated by coupling the translation source box corresponding to the webpage P1 and the translation destination box corresponding to the terminal 13 and by deploying the data of the webpage P1 in the translation source box, the text in the webpage P1 can be translated into a translation destination language regardless of the structure of the webpage P1. Specifically, even when embedded content is included in the webpage P1, the text of the content can be translated. Moreover, since the web server 11 acquires the language information set to the terminal 13 autonomously and uses the language as a translation destination language, even if the user does not perform a language selection operation, translation can be performed automatically using the language used by the terminal 13 of the user as a translation destination language. As another method for eliminating the need for a user to designate a translation destination language, a method of creating a top page only in languages of respective countries and translating a page other than the top page in the same language as the top page during browsing. However, this method has several problems. First, it is necessary to create the top page in languages of respective countries. Moreover, translation is not performed when the user directly accesses a page other than the top page. Furthermore, it is preferable that the top page is disposed in the server of respective countries for respective languages so that the user can reach a top page of a desired language. In contrast, these problems do not occur in the method of the present embodiment.

A plurality of texts of different languages may be included in a webpage to be translated. Embedded content that displays a text of a language different from the use language of the entire webpage may be included in a webpage. In this case, when the use language of the terminal 13 is different from a use language (a partial use language) used in any one of the texts included in the webpage, the web server 11 uses the portion as a translation target portion and transmits information on the use language of the terminal 13, information on the partial use language, information for specifying the translation target portion of the webpage, and the data of the webpage to the translation server 12. The translation server 12 defines a first translation box corresponding to the webpage and correlates the partial use language of the webpage with the first translation box and defines a second translation box corresponding to the terminal 13 to correlate the use language of the terminal 13 with the second translation box. In this case, as an example, one or more partial use languages for each translation target portion are correlated with the first translation box.

Fig. 4 is a sequence diagram illustrating an example of a webpage translation system according to Embodiment 1.

When a user designates a URL (Uniform Resource Locator) of a webpage that the user wants to browse (step 101), the terminal 13 acquires language information set thereto (step 102) and transmits a request including the designated URL and the language information of the terminal 13 to the web server 11 (step 103). In this example, it is assumed that English is set in the language information of the terminal 13.

Upon receiving a request from the terminal 13, the web server 11 recognizes the use language of the webpage designated by the URL and the use language of the terminal 13 set in the language information (step 104). Subsequently, the web server 11 compares the use language of the webpage and the use language of the terminal 13 to determine whether translation is necessary (step 105). When the use language of the webpage is identical to the use language of the terminal 13, it is determined that translation is not necessary. When the use language of the webpage is different from the use language of the terminal 13, it is determined that translation is necessary.

Here, it is assumed that the use language of the webpage is Japanese. Therefore, since the use language (Japanese) of the webpage is different from the use language (English) of the terminal 13, it is determined that translation is necessary.

When it is determined that translation is necessary, the web server 11 transmits a translation request including data of an original webpage written in Japanese, a translation source language, and a translation destination language, and an address of the terminal 13 to the translation server 12 (step 106) .

For example, the translation server 12 may provide an application programming interface (API) that controls execution of translation to the web server 11 and cooperate with the web server 11 with the aid of the API to thereby execute translation of a webpage and provide the translated webpage to the terminal 13. By doing so, since the translation server 12 provides a translation function with the aid of the API, automatic translation of a webpage can be realized easily by the web server 11 using the API.

Upon receiving a translation request from the web server 11, the translation server 12 defines a translation source box corresponding to the webpage and a translation destination box corresponding to the terminal 13 (steps 107 and 108).

Here, as an example, it is assumed that the translation source box and the translation destination box are set on the web server 11. Since a translation box is formed by the resources of the web server 11, consumption of the resources of the translation server 12 is suppressed, and the translation server 12 can provide translation of webpages of a number of web servers 11.

Subsequently, the translation server 12 determines the translation source language and the translation destination language as those included in the translation request and couples the translation source box and the translation destination box so that the text in the translation source box is translated and is deployed in the translation destination box (step 109). In this example, it is set such that the text is translated from Japanese into English.

The translation server 12 may execute translation with the aid of an external machine translation service or a machine translation engine introduced separately from the outside. Moreover, the translation server 12 may set connection with a machine translation service or a machine translation engine in advance and may use the connection with respect to a translation request upon receiving the translation request from the web server 11. Specifically, the translation server 12 may set one or more connections with the machine translation service or the machine translation engine in advance and may allocate a connection to a set made up of a terminal and a webpage upon receiving a translation request including information on the use language of the terminal 13 and the use language of the webpage from the web server 11. In this case, the translation server 12 further sets a translation source language and a translation destination language to the machine translation service or the machine translation engine of the allocated connection. Since a plurality of connections with the machine translation service or the machine translation engine is set in advance, when a translation request is received, it is not necessary to connect to the machine translation service or activate the machine translation engine via the communication network 90. Therefore, it is possible to couple the translation source box and the translation destination box quickly.

Subsequently, the translation server 12 deploys the data of the webpage included in the translation request in the translation source box to thereby translate the text included in the webpage from Japanese into English (step 110). In this case, the data of the webpage having the text translated into English is deployed in the translation destination box.

The translation server 12 transmits the data of the webpage translated into English in the translation destination box to the address of the terminal 13 included in the translation request (step 111). The terminal 13 displays the webpage received from the translation server 12 (step 112).

In this way, a webpage written in Japanese is automatically translated into English and is displayed to a user of which the terminal 13 is set to English.

When Japanese is set in the language information of the terminal 13, the web server 11 determines in step 105 that translation is not necessary and transmits the data of the original webpage designated by the URL to the terminal 13 as it is. As a result, the original webpage written in Japanese is displayed to the terminal 13.

When the language information is not set in the request transmitted from the terminal 13 in step 103, the web server 11 transmits the data of the original webpage designated by the URL to the terminal 13 as it is similarly to when it is determined in step 105 that translation is not necessary. As a result, the original webpage written in Japanese is displayed to the terminal 13.

Hereinafter, an example of a configuration and an operation of the web server 11 and the translation server 12 will be described in detail.

Fig. 5 is a block diagram of the web server 11. Referring to Fig. 5, the web server 11 includes a receiving unit 21, a transmitting unit 22, a translation necessity determining unit 23, and a storage unit 24.

The storage unit 24 stores data of a webpage.

The receiving unit 21 receives a request for a webpage designated by a URL from the terminal 13.

The translation necessity determining unit 23 acquires information on the use language set to the terminal 13 from the request received by the receiving unit 21 and determines whether the use language of the terminal 13 is identical to or different from the use language used in the designated webpage.

The transmitting unit 22 determines a destination according to a determination result of the translation necessity determining unit 23 and transmits data of the webpage.

Fig. 6 is a flowchart illustrating a webpage transmission process performed by the web server 11. The webpage transmission process is a process executed by the transmitting unit 22. When the translation necessity determining unit 23 determines that the use language of the terminal 13 is identical to the use language of the webpage (step 901: Yes), the transmitting unit 22 transmits the data of a webpage to the terminal 13 (step 902).

On the other hand, when the use language of the terminal 13 is different from the use language of the webpage (step 901: No), the transmitting unit 22 transmits a translation request including a translation source language, a translation destination language, the data of the webpage, and the address of the terminal 13 to the translation server 12 using the use language of the terminal 13 as a translation destination language and the use language of the webpage as a translation source language (step 903).

Fig. 7 is a block diagram of the translation server 12. Referring to Fig. 7, the translation server 12 includes a receiving unit 31, a transmitting unit 32, a box defining unit 33, a box coupling unit 34, and a box coupling execution unit 35.

The receiving unit 31 receives a translation request including information on the use language of the terminal 13 and the use language of the webpage and the data of the webpage from the web server 11.

The box defining unit 33 defines a translation source box corresponding to a webpage and correlates the use language of the webpage with the translation source box and defines a translation destination box corresponding to the terminal 13 and correlates the use language of the terminal 13 with the translation destination box.

The box coupling unit 34 sets coupling between the translation source box and the translation destination box so that the text included in the data in the translation source box is translated using the language correlated with the translation source box as a translation source language and the language correlated with the translation destination box as a translation destination language, and that the data in the translation source box is deployed in the translation destination box.

The box coupling execution unit 35 deploys the data of the webpage in the translation source box. That is, the box coupling execution unit 35 translates the text included in the webpage and deploys the data of the webpage in the translation source box in the translation destination box by the coupling of the translation source box and the translation destination box.

The transmitting unit 32 transmits the data of the translated webpage deployed in the translation destination box on the basis of the coupling to the terminal 13.

Fig. 8 is a flowchart illustrating a translation control process performed by the translation server 12. The translation control process is an entire process executed by the translation server 12.

In Fig. 8, first, the translation server 12 receives a translation request (step 201). The translation request includes data of a pre-translated webpage, information on a translation source language and a translation destination language, and the address of the terminal 13 having requested the webpage.

Subsequently, the translation server 12 executes a box defining process on the basis of the received translation request (step 202). Fig. 9 is a flowchart illustrating a detailed process of the box defining process.

The translation server 12 executes a translation source box setting process with respect to a translation source box corresponding to the webpage designated by the translation request (step 301). Specifically, the translation server 12 defines a translation source box corresponding to a webpage included in the translation request and correlates the use language of the webpage with the translation source box.

Subsequently, the translation server 12 executes a translation destination box setting process with respect to the translation destination box corresponding to the terminal 13 designated by the translation request (step 302). Specifically, the translation server 12 defines a translation destination box corresponding to the terminal 13 and correlates the use language of the terminal 13 with the translation destination box.

Returning to Fig. 8, subsequently, the translation server 12 sets coupling between the translation source box and the translation destination box so that the text included in the data in the translation source box is translated using the language correlated with the translation source box as a translation source language and the language correlated with the translation destination box as a translation destination language, and that the data in the translation source box is deployed in the translation destination box (step 203). The details of the box coupling process in step 203 will be described later.

Subsequently, the translation server 12 deploys the data of the webpage in the translation source box (step 204). The details of the translation execution process in step 204 will be described later.

Subsequently, the translation server 12 transmits the data of the translated webpage deployed in the translation destination box on the basis of the coupling to the terminal 13 indicated by the address included in the translation request (step 205).

Fig. 10 is a flowchart illustrating a detailed process of the box coupling process.

Referring to Fig. 10, in the box coupling process, first, the translation server 12 determines the translation source language (step 401). The translation source language may be recognized by acquiring information on the language correlated with the translation source box or may be recognized from the information on the translation source language included in the translation request.

Subsequently, the translation server 12 determines a translation destination language (step 402). The translation destination language may be recognized from the information on the language correlated with the translation destination box or may be recognized from the information on the translation destination language included in the translation request.

Subsequently, the translation server 12 translates the text included in the data in the translation source box from the translation source language recognized in step 401 to the translation destination language recognized in step 402 and couples the translation source box and the translation destination box so that the translated data is deployed in the translation destination box (step 403).

Fig. 11 is an image diagram illustrating how a translation source box and a translation destination box are coupled. In this example, it is assumed that Japanese is correlated with a translation source box Box_A and English is correlated with a translation destination box Box_B. Therefore, the data in the translation source box Box_A is deployed in the translation destination box Box_B and a coupling C1 for translating the text from Japanese to English is set between the boxes.

Fig. 12 is a flowchart illustrating a detailed process of the translation execution process. Referring to Fig. 12, the translation server 12 writes the data of a pre-translated webpage in the translation source box (step 501). As a result, by the coupling between boxes in the box coupling process, the data of the webpage written in the translation source box is written in the translation destination box while the text included in the webpage is being translated.

Fig. 13 is an image diagram illustrating how a webpage is translated by the translation execution process. According to the coupling C1, the webpage P1 in the translation source box Box_A written in Japanese is translated into English and is deployed in the translation destination box Box_B as the translated webpage P1E.

Returning to Fig. 12, subsequently, the translation server 12 reads the data of the translated webpage written in the translation destination box (step 502).

Hereinafter, an application example of the webpage translation system according to the present embodiment will be described.

### (Application Example 1)

Fig. 14 is a diagram for describing how a user uses a webpage translation system according to Application Example 1. Application Example 1 is an application example in which a user directly accesses a webpage of the language of the user with the aid of a two-dimensional code (for example QR code (trade mark)) described in an item information display tag 14 (a price tag) provided in a shelf or the like in a store so that the user can browse the webpage of the language of the user.

Referring to Fig. 14, a two-dimensional code Q1 as well as a normal display such as an item name, a price, and an item description are displayed in the item information display tag 14. The two-dimensional code Q1 indicates the URL of a webpage provided by the web server 11.

Fig. 15 is a diagram illustrating a webpage P2 on a URL indicated by the two-dimensional code Q1. The webpage P2 is an original webpage provided by the web server 11 and the text included therein is described in an original language. In the example of Fig. 15, texts T4 and T5 included in the webpage P2 are described in Japanese.

Therefore, when the terminal 13 in which Japanese is set as the language information reads the two-dimensional code Q1 in Fig. 14, the webpage P2 including the Japanese texts T4 and T5 is displayed on the terminal 13.

However, when the terminal 13 in which English, for example, other than Japanese is set as the language information reads the two-dimensional code Q1, the text in the webpage P2 is translated into English and is displayed on the terminal 13. Fig. 16 is a diagram illustrating a state in which the webpage in Fig. 15 is translated into English. When the terminal 13 in which English is set reads the two-dimensional code Q1, since the use language (Japanese) of the webpage P2 is not identical to the use language (English) of the terminal 13, the web server 11 requests the translation server 12 to translate the webpage P2. The translation server 12 transmits the data of the webpage P2E obtained by translating the webpage P2 in English to the terminal 13. As a result, the webpage P2E including the texts T4E and T5E translated into English is displayed on the terminal 13.

### (Application Example 2)

Fig. 17 is a diagram for describing how a user uses a webpage translation system according to Application Example 2. Application Example 2 is an application example in which a user directly accesses a webpage of the language of the user with the aid of a two-dimensional code described in a menu 15 provided in a restaurant so that the user can browse the menu in the language of the user.

Referring to Fig. 17, a two-dimensional code Q2 as well as a normal display such as a cookery name, a price, and a cooking description are displayed in the menu 15. The two-dimensional code Q2 indicates the URL of a webpage provided by the web server 11.

Fig. 18 is a diagram illustrating a webpage P3 on the URL indicated by the two-dimensional code Q2. The webpage P3 is an original webpage provided by the web server 11 and the text included therein is described in an original language. In the example of Fig. 18, texts T6, T7, T8, T9, and T10 included in the webpage P3 are described in Japanese.

Therefore, when the terminal 13 in which Japanese is set as the language information reads the two-dimensional code Q2 in Fig. 17, the webpage P3 including the Japanese texts T6, T7, T8, T9, and T10 is displayed on the terminal 13.

However, when the terminal 13 in which English, for example, other than Japanese is set as the language information reads the two-dimensional code Q2, the text in the webpage P3 is translated into English and is displayed on the terminal 13. Fig. 19 is a diagram illustrating a state in which the webpage in Fig. 18 is translated into English. When the terminal 13 in which English is set reads the two-dimensional code Q2, since the use language (Japanese) of the webpage P3 is not identical to the use language (English) of the terminal 13, the web server 11 requests the translation server 12 to translate the webpage P3. The translation server 12 transmits the data of the webpage P3E obtained by translating the webpage P3 in English to the terminal 13. As a result, the webpage P3E including the texts T6E, T7E, T8E, T9E, and T10E translated into English is displayed on the terminal 13.

As described above, in the webpage translation system of the present embodiment, the web server 11 can acquire the language information set to the terminal 13 automatically from the terminal 13 that has designated a URL to request for a webpage, and the translation server 12 defines a translation source box corresponding to the webpage and a translation destination box corresponding to the terminal 13, sets a translation source language and a translation destination language for translating text from the translation source box to the translation destination box, and deploys the data of the webpage in the translation source box to thereby translate the webpage. These features included herein, that is, allowing the web server 11 to acquire the language information set to the terminal 13 automatically from the terminal 13 that has designated a URL to request for a webpage and allowing the translation server 12 to define a translation source box corresponding to the webpage and a translation destination box corresponding to the terminal 13, set a translation source language and a translation destination language for translating text from the translation source box to the translation destination box, and deploy the data of the webpage in the translation source box to thereby translate the webpage can be independently and separately applied when constructing a webpage translation system.

In the webpage translation system of the present embodiment, as described above, the web server 11 automatically acquires the language information set to the terminal 13 from the terminal 13 that has designated the URL to request for a webpage. In this way, the user's convenience is improved. However, the webpage translation system may determine the translation destination language by another method. For example, a translate menu may be displayed in a webpage so that a user can designate the translation destination language and execution of translation with the aid of the translate menu.

### [Embodiment 2]

In Embodiment 1, a translation source box corresponding to a webpage and a translation destination box corresponding to a terminal are defined, these two translation boxes are coupled so that translation is executed between these boxes, and the data of the webpage is deployed in the translation source box to realize translation of the webpage. Even when embedded content is included in a webpage, the configuration and the operation are basically similar.

In contrast, in Embodiment 2, when embedded content is present in a webpage, a translation source box and a translation destination box for the embedded content are defined separately from the translation boxes for the entire webpage, these boxes are coupled, and the portion of the embedded content is deployed in the translation source box thereof.

Fig. 20 is an image diagram illustrating a display example of a webpage including embedded content that displays text in a language different from that of the webpage. Referring to Fig. 20, the text of a webpage P4 is generally described in Japanese. Specifically, texts T1, T2, and T3 are described in Japanese. However, a text E3 that the embedded content displays in Chinese is described. A translation source box (a third translation box) different from a translation source box (a first translation box) for the entire webpage is defined for the embedded content. Moreover, a translation destination box (a fourth translation box) different from a translation destination box (a second translation box) for the entire webpage is defined as the translation destination box.

Hereinafter, a configuration and an operation of the system and the apparatus according to Embodiment 2 will be described.

A basic configuration of the webpage translation system according to Embodiment 2 is similar to that of Embodiment 1 illustrated in Fig. 1.

A basic configuration of the web server 11 is similar to that of Embodiment 1 illustrated in Fig. 5. In Embodiment 2, the web server 11 also performs the following process. The translation necessity determining unit 23 of Embodiment 2 determines whether the use language of the terminal 13 is identical to the use language of the embedded content. When the use language of the terminal 13 is different from the use language of the embedded content, the web server 11 inserts an internal translation request in the portion of the embedded content of the data of the webpage to be transmitted to the translation server 12, the request indicating that the portion is to be translated, and transmits the use language of the embedded content to the translation server 12 as the translation source language of the internal translation request. When the use language of the terminal 13 is different from the use language of the embedded content, the web server 11 may insert an instruction in the portion of the embedded content of the data of the webpage transmitted to the translation server 12, the instruction indicating that translation of the portion is not necessary.

A basic configuration of the translation server 12 of Embodiment 2 is similar to that of Embodiment 1 illustrated in Fig. 7. In Embodiment 2, the translation server 12 also performs the following process.

The box defining unit 33 of Embodiment 2 defines a translation source box (a third translation box) corresponding to the embedded content and correlates the use language of the embedded content with the third translation box. In the example of Fig. 20, since the embedded content E3 displays a Chinese text, Chinese which is the use language of the embedded content E3 is correlated with the third translation box.

Furthermore, the box defining unit 33 defines a translation destination box (a fourth translation box) for the embedded content corresponding to the terminal 13 and correlates the use language of the terminal 13 with the fourth translation box. If the use language of the terminal 13 is English in the example of Fig. 20, English which is a translation destination language is correlated with the fourth translation box.

The box coupling unit 34 of Embodiment 2 sets coupling between the third translation box and the fourth translation box so that the text included in the data in the third translation box is translated using the language correlated with the third translation box as a translation source language and the language correlated with the fourth translation box as a translation destination language, and is deployed in the fourth translation box.

The box coupling execution unit 35 of Embodiment 2 deploys data including text other than the embedded content of the webpage in the first translation box and deploys data including the text of the embedded content of the webpage in the third translation box.

The transmitting unit 32 transmits data of the translated webpage obtained by combining the data deployed in the second translation box and the data deployed in the fourth translation box to the terminal 13. Combination mentioned herein indicates a process of deploying the data in the fourth translation box in a portion of the embedded content of the data of the webpage in the second translation box.

According to the present embodiment, when embedded content that displays tests of a language different from the entire webpage in the webpage on the basis of a database such as a bulletin board, an input form, or a shopping cart is present in the webpage, a translation box for the embedded content is defined separately from the translation box for the entire webpage in order to perform translation of the portion of the embedded content in the webpage. Therefore, it is possible to easily construct a translated webpage in which the respective texts are translated from the respective use languages into the use language of the terminal.

### [Embodiment 3]

In the webpage translation system 10 of Embodiment 1, as illustrated in Fig. 4, the web server 11 transmits the data of the webpage to be translated to the translation server 12, and the translation server 12 transmits the data of the translated webpage to the terminal 13. In contrast, Embodiment 3 illustrates an example in which the web server 11 transmits data of a portion to be translated of a webpage to the translation server 12, and the translation server 12 translates the portion and sends the translated portion back to the webpage 11, and the web server 11 transmits the data of the translated webpage to the terminal 13.

Fig. 21 is a sequence diagram illustrating an operation of a sensor network system according to Embodiment 3. A case in which a Japanese webpage is translated into English similarly to Embodiment 1 illustrated in Fig. 4 is illustrated.

When a user designates a URL of a webpage that the user wants to browse (step 101), the terminal 13 acquires language information set thereto (step 102) and transmits a request including the designated URL and the language information of the terminal 13 to the web server 11 (step 103). The web server 11 recognizes the use language of the webpage designated by the URL and the use language of the terminal 13 set in the language information (step 104), and compares the use languages thereof to determine whether translation is necessary (step 105). When the use language of the webpage is identical to the use language of the terminal 13, it is determined that translation is not necessary. When the use language of the webpage is different from the use language of the terminal 13, it is determined that translation is necessary. The steps hereinabove are the same as those of Embodiment 1 illustrated in Fig. 4.

When it is determined that translation is necessary, the web server 11 transmits a translation request including data of the text to be translated of the original webpage written in Japanese, a translation source language, and a translation destination language to the translation server 12 (step 106').

Upon receiving a translation request from the web server 11, the translation server 12 defines a translation source box corresponding to the webpage and a translation destination box corresponding to the terminal 13 (steps 107 and 108). Subsequently, the translation server 12 determines the translation source language and the translation destination language as those included in the translation request and couples the translation source box and the translation destination box so that the text in the translation source box is translated and is deployed in the translation destination box (step 109). Steps 107 to 109 are similar to those of Embodiment 1 illustrated in Fig. 4.

Subsequently, the translation server 12 deploys the data of the text included in the translation request in the translation source box to thereby translate the text from Japanese into English (step 110a'). In this case, the text is translated into English and is deployed in the translation destination box.

The translation server 12 sends the data of the text translated into English in the translation destination box back to the web server 11 as a translation response (step 110b').

The web server 11 transmits the data of the webpage in which the portion of the Japanese text in the webpage transmitted to the translation server 12 via the translation request is replaced with the English text received from the translation server 12 via the translation response to the terminal 13 as a HTTP response (step 111'). The terminal 13 displays the webpage received from the translation server 12 (step 112).

In this way, a webpage written in Japanese is automatically translated into English and is displayed to a user of which the terminal 13 is set to English.

A basic configuration of the web server 11 of Embodiment 3 is similar to that of Embodiment 1 illustrated in Fig. 5, but the process thereof is partially different. Hereinafter, the different portions will be mainly described.

Fig. 22 is a flowchart illustrating a webpage transmission process performed by the web server 11. The webpage transmission process is a process executed by the transmitting unit 22 of Embodiment 3. The transmitting unit 22 transmits the data of the webpage to the terminal 13 (step 902') when the translation necessity determining unit 23 determines that the use language of the terminal 13 is identical to the use language of the webpage (step 901: Yes).

On the other hand, when the use language of the terminal 13 is different from the use language of the webpage (step 901: No), the transmitting unit 22 transmits a translation request including a translation source language, a translation destination language, and the text to be translated of the webpage to the translation server 12 using the use language of the terminal 13 as a translation destination language and the use language of the webpage as a translation source language (step 903').

After that, upon receiving, from the translation server 12, a translation response including the text translated from the translation source language into the translation destination language (step 904), the transmitting unit 22 transmits the data of the webpage in which the text to be translated is replaced with the translated text to the terminal 13 (step 902').

A basic configuration of the translation server 12 of Embodiment 3 is similar to that of Embodiment 1 illustrated in Fig. 7, but the process thereof is partially different. Hereinafter, the different portions will be mainly described.

Fig. 23 is a flowchart illustrating a translation control process performed by the translation server 12 of Embodiment 3.

In Fig. 23, first, the translation server 12 receives a translation request (step 201'). The translation request includes the data of a text to be translated of the pre-translated webpage and information on the translation source language and the translation destination language.

Subsequently, the translation server 12 executes a box defining process on the basis of the received translation request (step 202). The box defining process is basically the same as that of Embodiment 1 illustrated in Fig. 9.

Subsequently, the translation server 12 sets coupling between the translation source box and the translation destination box so that the text included in the data in the translation source box is translated using the language correlated with the translation source box as a translation source language and the language correlated with the translation destination box as a translation destination language, and that the data in the translation source box is deployed in the translation destination box (step 203). The box coupling process is basically the same as that of Embodiment 1 illustrated in Fig. 10.

Subsequently, the translation server 12 deploys the data of the text to be translated of the webpage in the translation source box (step 204). The translation execution process is basically the same as that of Embodiment 1 illustrated in Fig. 12 except that the data to be deployed is the data of a portion of the text rather than the webpage itself.

Subsequently, the translation server 12 transmits the data of the text of the translated webpage deployed in the translation destination box on the basis of the coupling to the web server 11 which is a transmission source of the translation request (step 205').

When embedded content that displays a text based on a database in a webpage is included in the webpage, it may be necessary to translate the text of the embedded content into the use language of the terminal 13. In this case, the web server 11 determines whether the use language of the terminal 13 is identical to the use language of the embedded content. When the use language of the terminal 13 is different from the use language of the embedded content, the web server 11 requests the translation server 12 to translate the text of the embedded content using the use language of the embedded content as a translation source language and the language of the terminal 13 as a translation destination language via a translation request.

The translation server 12 performs the following process by a method similar to translation of the text of the webpage. That is, the translation server 12 defines a third translation box corresponding to the embedded content and correlates the use language of the embedded content with the third translation box and defines a fourth translation box corresponding to the terminal 13 and correlates the use language of the terminal 13 with the fourth translation box. Coupling between the third translation box and the fourth translation box is set so that the text included in the data in the third translation box is translated using the language correlated with the third translation box as a translation source language and the language correlated with the fourth translation box as a translation destination language, and is deployed in the fourth translation box, and the data of the text of the embedded content of the webpage is deployed in the third translation box. The translation server 12 transmits the data of the translated text of the embedded content deployed in the fourth translation box to the web server 11.

The web server 11 transmits the data of the webpage in which the text of the webpage and the text of the embedded content are replaced with the translated text of the webpage and the translated text of the embedded content received from the translation server 12 to the terminal 13.

### [Embodiment 4]

Using the function of the translation server 12 of the webpage translation system 10 according to Embodiment 1, a large number of portions of a multilingual communication system that provides translation-enabled terminal-to-terminal communication can be shared and configured easily.

In Embodiment 4, the translation server 12 of the webpage translation system 10 also serves as a multilingual communication system that provides translation-enabled terminal-to-terminal communication.

A basic configuration of the webpage translation system 10 of Embodiment 3 is similar to that of Embodiment 1 illustrated in Fig. 1.

Fig. 24 is a sequence diagram illustrating exchange of signals with a terminal, of a translation server that operates as a multilingual communication system according to Embodiment 4. In this example, a state in which a terminal 13A of a user AA and a terminal 13B of a user BB start chatting by connecting to the translation server 12 as a two-party chatting is illustrated.

When the user AA requests connection to the translation server 12 using a browser on the terminal 13A (step 601), the terminal 13A acquires the language information set in the browser (step 602) and connects to the translation server 12 while notifying the translation server 12 of the language information (step 603). In this case, the translation server 12 recognizes the language used in the terminal 13A (step 604) .

Similarly, when the user BB requests connection to the translation server 12 using a browser on the terminal 13B (step 605), the terminal 13B acquires the language information set in the browser (step 606) and connects to the translation server 12 while notifying the translation server 12 of the language information (step 607). In this case, the translation server 12 recognizes the language used in the terminal 13B (step 608).

In this state, when the user AA requests the start of chatting with the user BB using the terminal 13A (step 609), the terminal 13A sends a chatting request to the translation server 12 (step 610). The translation server 12 defines a terminal message box Box_A for the chatting of the terminal 13A in which a transmission message from the terminal 13A and a reception message to the terminal 13A are described and displayed in a time-series manner and correlates the use language (in this example, English) of the terminal 13A with the terminal message box Box_A (step 611). Displaying in a time-series manner means that the messages are displayed in a time-series order and does not mean that messages are recorded in a time-series order. For example, if information on a writing time point is appended to each message, the messages can be displayed in a time-series manner. The terminal message box is a box which can be used as the translation source box and the translation destination box both.

When the user BB requests the start of chatting with the user AA using the terminal 13B (step 612), the terminal 13B sends a chatting request to the translation server 12 (step 613). The translation server 12 defines a terminal message box Box_B for the chatting of the terminal 13B in which a transmission message from the terminal 13B and a reception message to the terminal 13B are described and displayed in a time-series manner and correlates the use language (in this example, Japanese) of the terminal 13B with the terminal message box Box_B (step 314).

When the terminal message boxes Box_A and Box_B of the terminals 13A and 13B are provided, the translation server 12 couples the terminal message box Box_A and the terminal message box Box_B (step 615). This coupling involves fixing the translation source language and the translation destination language of the translation of text between terminal message boxes to create a state in which the text written in one terminal message box is translated immediately and is applied to the other terminal message box. Although the coupling is one-directional from one terminal message box to the other terminal message box, two couplings of both directions are generally set simultaneously.

Fig. 25 is an image diagram illustrating how terminal message boxes are coupled. In this example, it is assumed that English is correlated with the terminal message box Box_A and Japanese is correlated with the terminal message box Box_B. Therefore, coupling C2 is set such that the text in the terminal message box Box_A is translated from English into Japanese and is written to the terminal message box Box_B. Moreover, coupling C3 is set such that the text in the terminal message box Box_B is translated from Japanese into English and is written to the terminal message box Box_A.

When coupling from the terminal message box Box_A to the terminal message box Box_B is set, the translation server 12 translates the text of the transmission message written to the terminal message box Box_A defined in the terminal 13A using the use language (English) of the terminal message box Box_A as the translation source language and the use language (Japanese) of the terminal message box Box_B defined in the terminal 13B as the translation destination language, and writes the translated text as the text of the reception message of the terminal message box Box_B. Moreover, when coupling from the terminal message box Box_B to the terminal message box Box_A is set, the translation server 12 translates the text of the transmission message written to the terminal message box Box_B defined in the terminal 13B using the use language (Japanese) of the terminal message box Box_B as the translation source language and the use language (English) of the terminal message box Box_A defined in the terminal 13A as the translation destination language, and writes the translated text as the text of the reception message of the terminal message box Box_A.

After that, when the user AA writes text (step 616), the text is transmitted from the terminal 13A to the translation server 12 as a transmission message (step 617), and the translation server 12 translates the text from English into Japanese immediately (step 618). Similarly, when the user BB writes text (step 619), the text is transmitted from the terminal 13B to the translation server 12 as a transmission message (step 620), and the translation server 12 translates the text from Japanese into English immediately (step 621). Once the coupling is set once, since the translation source language and the translation destination language are not changed until the coupling is canceled, the translation server 12 can start translation of the written text immediately.

The web server 11 of Embodiment 4 is similar to that of Embodiment 1.

A basic configuration of the translation server 12 of Embodiment 4 is similar to that of Embodiment 1 illustrated in Fig. 7. In Embodiment 4, the translation server 12 also performs the following process.

The box defining unit 33 of Embodiment 4 connects to a plurality of terminals 13 participating in communication and acquires the language information set to each of the terminals 13 to recognize the use language used by the terminal 13. Furthermore, the box defining unit 33 defines a terminal message box for communication of each terminal 13 in which the terminal message box from the terminal 13 and the reception message to the terminal 13 are described and displayed in a time-series manner and correlates the use language of the terminal 13 with the terminal message box.

The box coupling unit 34 of Embodiment 4 sets coupling between a first terminal message box and a second terminal message box so that the transmission message written to the terminal message box (the first terminal message box) defined in one terminal (the terminal 13A) is translated using the use language of the first terminal message box as the translation source language and the use language of the terminal message box (the second terminal message box) defined in the other terminal (the terminal 13B) as the translation destination language and is written in the second terminal message box as the reception message. Similar coupling is set to the transmission message from the terminal 13B to the terminal 13A.

The box coupling execution unit 35 of Embodiment 4 translates the transmission message from the translation source language into the translation destination language according to the coupling when the transmission message is written from the terminal 13A to the first terminal message box, and writes the translated transmission message in the second terminal message box as the reception message.

When the terminal 13 connects to a communication system and sets communication with a certain counterpart, the language information set to the terminal 13 is acquired, the terminal message box of each terminal is defined, and the terminal message boxes are coupled in advance so that the message written from the terminal 13 is translated and is displayed on the other terminal 13. Therefore, when a message is written from one terminal 13, the message can be translated immediately and the translated message can be displayed on the other terminal 13. Moreover, since the translation server 12 also serves as a multilingual communication system that provides translation-enabled communication between the terminals 13, similar functions can be implemented efficiently.

The embodiments of the present invention are examples for describing the present invention and the scope of the present invention is not limited to these embodiments. Those skilled in the art can implement the present invention in various other forms without departing from the spirit of the present invention.

Moreover, the web server and the translation server of the respective embodiments can be realized by causing a computer to execute a software program defining the processing procedure of the respective units of the servers.

Furthermore, the web server and the translation server of the respective embodiments may not be separate apparatuses. For example, the web server and the translation server may be integrated with each other in such a way that the translation server is implemented in the web server.

Part or all of the foregoing embodiments of the present invention can be rephrased as the following supplementary notes. However, the present invention is not limited to the following supplementary notes.

### (Supplementary Note A1)

A webpage translation system including:
a webpage providing apparatus that stores data of a webpage including a text and provides the webpage to a terminal; and
a webpage translation apparatus that translates the text of the webpage, wherein
the webpage providing apparatus:
   acquires, upon receiving a request from the terminal, information on a use language set to the user terminal; and
   transmits, when the use language of the terminal is different from a use language used in the webpage, information on the use language of the terminal and the use language of the webpage and the data of the webpage to the webpage translation apparatus, and
   the webpage translation apparatus:
      translates the text included in the data of the webpage using the use language of the terminal as a translation destination language; and
      transmits the data of the translated webpage to the terminal.

Due to this configuration, when the use language of the webpage is different from the use language of the terminal, the webpage providing apparatus transmits the data of the webpage to the webpage translation apparatus, and the webpage translation apparatus translates the text included in the data of the webpage and transmits the translated text to the terminal. Therefore, it is possible to translate the text in the webpage regardless of the structure of the webpage. Specifically, even when embedded content is included in the webpage, the text of the content can be translated.

Moreover, the webpage providing apparatus acquires the language information set to the terminal and uses the language as a translation destination language. Therefore, the text can be automatically translated into the language used in the user terminal even when the user does not perform a language selection operation.

### (Supplementary Note A2)

In the webpage translation system according to Supplementary Note A1,
the terminal accesses the webpage providing apparatus via a browser, and
the webpage providing apparatus acquires language information registered in the browser of the terminal.

### (Supplementary Note A3)

In the webpage translation system according to Supplementary Note A1,
the webpage providing apparatus acquires language information set to an operating system that operates on the terminal.

### (Supplementary Note B1)

A webpage translation system including:
a webpage providing apparatus that stores data of a webpage including a text and provides the webpage to a terminal; and
a webpage translation apparatus that translates the text of the webpage, wherein
the webpage providing apparatus transmits, upon receiving a request for the webpage from the terminal and a request to translate the webpage into a translation destination language different from a use language used in the webpage, information on the translation destination language and the use language of the webpage and data of the webpage to the webpage translation apparatus, and
the webpage translation apparatus:
   defines a first translation box corresponding to the webpage and correlates the use language of the webpage with the first translation box;
   defines a second translation box corresponding to the terminal and correlates the translation destination language with the second translation box;
   sets coupling between the first translation box and the second translation box so that a text included in data in the first translation box is translated using the language correlated with the first translation box as a translation source language and the language correlated with the second translation box as a translation destination language, and that the data in the first translation box is deployed in the second translation box;
   deploys the data of the webpage in the first translation box; and
   transmits the data of the translated webpage deployed in the second translation box on the basis of the coupling to the terminal.

Due to this configuration, the first translation box corresponding to the webpage and the second translation box corresponding to the terminal are coupled, the translation source language and the translation destination language for translating text from the first translation box to the second translation box are set, and the data of the webpage is deployed in the first translation box to translate the webpage. Therefore, the text in the webpage can be translated regardless of the structure of the webpage. Specifically, even when embedded content is included in the webpage, it is possible to translate the text of the content.

### (Supplementary Note B2)

In the webpage translation system according to Supplementary Note B1,
the webpage providing apparatus:
transmits, upon receiving a request from the terminal, data of the webpage including a translation menu that designates execution of translation and a translation destination language to the terminal; and
transmits, when execution of translation and the translation destination language are designated in the terminal, information on the translation destination language and the use language of the webpage and the data of the webpage to the webpage translation apparatus.

### [Reference Signs List]

- 10: Webpage translation system
- 11: Web server
- 12: Translation server
- 13: Terminal
- 13A: Terminal
- 13B: Terminal
- 14: Item information display tag
- 15: Menu
- 21: Receiving unit
- 22: Transmitting unit
- 23: Translation necessity determining unit
- 24: Storage unit
- 31: Receiving unit
- 32: Transmitting unit
- 33: Box defining unit
- 34: Box coupling unit
- 35: Box coupling execution unit
- 90: Communication network

## Claims

1. A webpage translation system comprising:
a webpage providing apparatus configured to store data of a webpage including a text and provide the webpage to a terminal; and
a webpage translation apparatus configured to translate the text of the webpage, wherein
the webpage providing apparatus is configured to:
upon receiving a request for the webpage from the terminal, acquire information on a use language set to the user terminal; and
when the use language of the terminal is different from a use language used in the webpage, request translation of the text of the webpage using the use language of the webpage as a translation source language and the use language of the terminal as a translation destination language, and
the webpage translation apparatus is configured to:
define a first translation box corresponding to the webpage and correlate the use language of the webpage with the first translation box;
define a second translation box corresponding to the terminal and correlate the use language of the terminal with the second translation box;
set coupling between the first translation box and the second translation box so that a text included in data in the first translation box is translated using the language correlated with the first translation box as a translation source language and the language correlated with the second translation box as a translation destination language, and that the data in the first translation box is deployed in the second translation box; and
translate the text by deploying data of the text in the first translation box.

2. The webpage translation system according to claim 1, wherein
the webpage providing apparatus is configured to transmit, as the request for translation, information on the use language of the terminal and the use language of the webpage and the data of the webpage to the webpage translation apparatus, and
the webpage translation apparatus is configured to:
deploy the data of the webpage in the first translation box; and
transmit the data of the translated webpage deployed in the second translation box on the basis of the coupling to the terminal.

3. The webpage translation system according to claim 1, wherein
the webpage providing apparatus is configured to transmit, as the request for translation, information on the use language of the terminal and the use language of the webpage and data of the text of the webpage to the webpage translation apparatus,
the webpage translation apparatus is configured to:
deploy the data of the text of the webpage in the first translation box; and
transmit the data of the text of the translated webpage deployed in the second translation box on the basis of the coupling to the webpage providing apparatus, and
the webpage providing apparatus is configured to transmit, to the terminal, the data of the webpage in which a portion of the text is replaced with the translated text.

4. The webpage translation system according to claim 1, wherein
the terminal is configured to access the webpage providing apparatus via a browser, and
the webpage providing apparatus is configured to acquire language information registered in the browser of the terminal.

5. The webpage translation system according to claim 1, wherein
the webpage providing apparatus is configured to acquire language information set to an operating system that operates on the terminal.

6. The webpage translation system according to claim 2, wherein
the webpage translation apparatus is configured to provide an application programming interface that controls execution of translation to the webpage providing apparatus, and to cooperate with the webpage providing apparatus via the application programming interface to thereby execute translation of the webpage and provision of the translated webpage to the terminal.

7. The webpage translation system according to claim 1, wherein
the first translation box and the second translation box are set on the webpage providing apparatus.

8. The translation control system according to claim 1, wherein
the webpage translation apparatus is configured to:
set one or more connections with a machine translation service or a machine translation engine in advance;
upon receiving information on the use language of the terminal and the use language of the webpage, allocate the connection to a set made up of the terminal and the webpage; and
set the translation source language and the translation destination language to the machine translation service or the machine translation engine of the allocated connection.

9. The webpage translation system according to claim 2, wherein
the webpage includes embedded content that displays a text based on a database in the webpage,
the webpage providing apparatus is configured to:
determine whether the use language of the terminal is identical to a use language of the embedded content; and
when the use language of the terminal is different from the use language of the embedded content, insert an internal translation request in a portion of the embedded content of the data of the webpage to be transmitted to the webpage translation apparatus, the internal translation request indicating that the portion is to be translated, and transmit the use language of the embedded content to the webpage translation apparatus as a translation source language of the internal translation request, and
the webpage translation apparatus is configured to:
define a third translation box corresponding to the embedded content and correlate the use language of the embedded content with the third translation box, and define a fourth translation box corresponding to the terminal and correlate the use language of the terminal with the fourth translation box;
set coupling between the third translation box and the fourth translation box so that a text included in data in the third translation box is translated using the language correlated with the third translation box as a translation source language and the language correlated with the fourth translation box as a translation destination language, and is deployed in the fourth translation box;
deploy data including a text other than the embedded content of the webpage in the first translation box, and deploy data including a text of the embedded content of the webpage in the third translation box; and
transmit, to the terminal, the data of the translated webpage in which the data deployed in the second translation box and the data deployed in the fourth translation box are combined.

10. The webpage translation system according to claim 3, wherein
the webpage includes embedded content that displays a text based on a database in the webpage,
the webpage providing apparatus is configured to:
determine whether the use language of the terminal is identical to a use language of the embedded content; and
when the use language of the terminal is different from the use language of the embedded content, further request translation of the text of the embedded content using the use language of the embedded content as a translation source language and the language of the terminal as a translation destination language in the translation request,
the webpage translation apparatus is configured to further:
define a third translation box corresponding to the embedded content and correlate the use language of the embedded content with the third translation box, and define a fourth translation box corresponding to the terminal and correlate the use language of the terminal with the fourth translation box;
set coupling between the third translation box and the fourth translation box so that a text included in data in the third translation box is translated using the language correlated with the third translation box as a translation source language and the language correlated with the fourth translation box as a translation destination language, and is deployed in the fourth translation box;
deploy data of the text of the embedded content of the webpage in the third translation box; and
transmit the data of the translated text of the embedded content deployed in the fourth translation box to the webpage providing apparatus, and
the webpage providing apparatus is configured to transmit, to the terminal, data of the webpage in which the text of the webpage and the text of the embedded content are respectively replaced with the translated text of the webpage and the translated text of the embedded content.

11. The webpage translation system according to claim 1, wherein
the webpage translation apparatus also serves as a multilingual communication system that provides translation-enabled terminal-to-terminal communication,
the box defining unit is configured to connect to a plurality of terminals participating in the communication, acquire language information set to each of the terminals to recognize a use language used in the terminal from the language information, define, for the communication of each terminal, a terminal message box in which a transmission message from a terminal and a reception message to the terminal are described and displayed in a time-series manner, and correlate the use language of the terminal with the terminal message box,
the box coupling unit is configured to set coupling between a first terminal message box and a second terminal message box so that a transmission message written to the first terminal message box defined in a first terminal is translated using a use language of the first terminal message box as a translation source language and a use language of the second terminal message box defined in a second terminal as a translation destination language and is written to the second terminal message box as a reception message, and
the box coupling execution unit is configured to, when a transmission message is written from the first terminal to the first terminal message box, translate the transmission message from the translation source language into the translation destination language according to the coupling, write the transmission message in the second transmission message as a reception message and display the reception message on the second terminal.

12. A webpage translation apparatus in a webpage translation system including a webpage providing apparatus that stores data of a webpage including a text and provides the webpage to a terminal, and the webpage translation apparatus that translates the text of the webpage, the webpage providing apparatus acquiring, upon receiving a request from the terminal, information on a use language set to the user terminal and transmitting, when the use language of the terminal is different from a use language used in the webpage, information on the use language of the terminal and the use language of the webpage and data of the text of the webpage to the webpage translation apparatus, the webpage translation apparatus comprising:
a receiving unit configured to receive the information on the use language of the terminal and the use language of the webpage and the data of the webpage from the webpage providing apparatus;
a box defining unit configured to define a first translation box corresponding to the webpage and correlate the use language of the webpage with the first translation box, and define a second translation box corresponding to the terminal and correlate the use language of the terminal with the second translation box;
a box coupling unit configured to set coupling between the first translation box and the second translation box so that a text included in data in the first translation box is translated using the language correlated with the first translation box as a translation source language and the language correlated with the second translation box as a translation destination language, and that the data in the first translation box is deployed in the second translation box; and
a box coupling execution unit configured to deploy data of the text of the webpage in the first translation box.

13. A webpage translation apparatus in a webpage translation system including a webpage providing apparatus that stores data of a webpage including a text and provides the webpage to a terminal, and the webpage translation apparatus that translates the text of the webpage, the webpage providing apparatus comprising:
a receiving unit configured to receive a request from the terminal;
a translation necessity determining unit configured to, when the receiving unit receives the request, acquire information on a use language set to the terminal and determine whether the use language of the terminal is identical to a use language used in the webpage; and
a transmitting unit configured to, when the use language of the terminal is different from the use language used in the webpage, transmit information on the use language of the terminal and the use language of the webpage and data of the text of the webpage to the webpage translation apparatus.

14. A webpage translation method executed by a webpage translation system including a webpage providing apparatus that stores data of a webpage including a text and provides the webpage to a terminal, and a webpage translation apparatus that translates the text of the webpage, wherein
the webpage providing apparatus:
acquires, upon receiving a request from the terminal, information on a use language set to the terminal; and
transmits, when the use language of the terminal is different from a use language used in the webpage, information on the use language of the terminal and the use language of the webpage and data of the text of the webpage to the webpage translation apparatus, and
the webpage translation apparatus:
defines a first translation box corresponding to the webpage and correlates the use language of the webpage with the first translation box;
defines a second translation box corresponding to the terminal and correlates the use language of the terminal with the second translation box;
sets coupling between the first translation box and the second translation box so that a text included in data in the first translation box is translated using the language correlated with the first translation box as a translation source language and the language correlated with the second translation box as a translation destination language, and that the data in the first translation box is deployed in the second translation box;
deploys data of the text of the webpage in the first translation box; and
acquires the data of the translated webpage deployed in the second translation box on the basis of the coupling.
